# EUROPEAN PATENT APPLICATION

(11) **EP 0 986 957 A1**
(43) Date of publication of application: **22.03.2000**
(21) Application number: 99307271.9
(22) Date of filing: 14.09.1999
(51) Int. Cl.: A22C 13/00

(54) **Packaged product utilizing flavor transfer film, and method of making and using same**

(30) Priority: 15.09.1998 US 153697
(71) Applicant: Cryovac, Inc., Duncan, S.C. 29334-0464 (US)
(72) Inventor: Luthra, Narender P., (US); Pressley, Woodrow W., Simpsonville, SC 29681 (US)
(74) Representative: Senior, Alan Murray

(57) **Abstract**

A packaged product comprising a cooked meat product surrounded by a multilayer film comprising:
(A) a first layer comprising
   (i) a flavor component and (ii) a binder comprising a polysaccharide or protein; and
(B) a second layer comprising at least one non-water-soluble thermoplastic polymer; and
wherein the flavor and the binder are present throughout the thickness of the first layer and the first layer is between the second layer and the cooked meat product, a process for preparing the packaged food product and processes for making a multilayer film suitable for use in the packaged product.

## Description

### Field of the Invention

The present invention relates to packaged meat products, and to methods of making and using same. The present invention is related to the transference of a flavor from a multilayer film to cooked meat.

### Background of the Invention

In the packaging of cooked meat products, flavors and fragrances acquired before, during, or after cooking are frequently diminished by storage and/or freezing, and/or by packaging the cooked meat product under vacuum. However, there is a demand for cooked meat products with desirable flavors and/or fragrances. Thus, it would be desirable to provide a cooked meat product having the desired flavors and/or fragrances even if the cooked meat product is stored for a period prior to packaging or consumption, and/or even if the cooked meat product is frozen after cooking, and/or even if the meat product is packaged under vacuum.

### Summary of the Invention

The present invention enables the preparation of a packaged cooked meat product which has a desired flavor upon reheating. The invention enables the cooked meat product to be served with the desired type and level of flavoring, in spite of whether the cooked meat product was stored after it was cooked, and/or frozen after it was cooked, and/or whether it was packaged under vacuum after it was cooked.

The invention provides the cooked meat product with the desired flavor through the use of a coating on an inside surface of a film in which the cooked meat product is packaged. The coating has a desired level and type of flavorant. Upon reheating the cooked meat product while the cooked meat product is packaged in the film, the flavorant is transferred from the film to the cooked meat product. Thereafter, the film can be removed from the cooked meat product, with the flavor being transferred to the reheated, cooked meat product. In this manner, the cooked meat product can be served with the desired type and level of flavorant, in spite of its storage, freezing, and packaging history. The invention is especially useful for the providing cooked poultry with a grilled flavor.

As a first aspect, the present invention pertains to a packaged product comprising a cooked meat product surrounded by a multilayer film. The multilayer film comprises a first layer and a second layer. The first layer comprises: (i) a flavor, and (ii) a binder comprising at least one member selected from the group consisting of polysaccharide and protein. The second layer comprises a non-water-soluble thermoplastic polymer comprising at least one member selected from the group consisting of polyolefin, polyamide, polyester, polyvinylidene chloride, polyvinyl chloride, and polystyrene. The flavor and the binder are present throughout a thickness of the first layer. The flavor is in the first layer. The first layer is between the second layer and the cooked meat product. As a general rule, the flavor is present as a discontinuous phase, with the binder being present as a continuous phase. Preferably, the flavor comprises grilled chicken flavor and the meat comprises poultry.

Preferably, the binder comprises at least one member selected from the group consisting of alginate, methyl cellulose, hydroxypropyl starch, hydroxypropylmethyl starch, hydroxymethyl cellulose, hydroxypropyl cellulose, hydroxypropylmethyl cellulose, carboxymethyl cellulose, cellulose esterified with 1-octenyl succinic anhydride, chitin, and chitosan, gliadin, glutenin, globulin, albumin, prolamin, thrombin, pectin, canageenan, konjac flour-glucomannin, fibrinogen, casein, soy protein, whey protein, and wheat protein.

Alternatively, the binder preferably comprises at least one member selected from the group consisting of: (A) polysaccharide esterified with at least one member selected from the group consisting of: acetic anhydride, propionic anhydride, alkyl-propionic anhydride, butyric anhydride, alkyl-butyric anhydride, succinic anhydride, alkyl-succinic anhydride, maleic anhydride, alkyl-maleic anhydride, adipic anhydride, alkyl-adipic anhydride, and vinyl acetate; and (B) polysaccharide etherified with at least one member selected from the group consisting of acrolein, epichlorihydrin, ethylene glycol, ethylene glycol oligomer, propylene glycol, propylene glycol oligomer, ethylene oxide, and propylene oxide.

Alternatively, the binder preferably comprises: (A) a first binder comprising at least one member selected from the group consisting of alginate, methyl cellulose, hydroxypropyl starch, hydroxypropylmethyl starch, hydroxymethyl cellulose, hydroxypropyl cellulose, hydroxypropylmethyl cellulose, carboxymethyl cellulose, cellulose esterified with 1-octenyl succinic anhydride, chitin, and chitosan; and (B) a second binder comprising at least one member selected from the group consisting of gliadin, glutenin, globulin, albumin, prolamin, thrombin, pectin, canageenan, konjac flour-glucomannin, fibrinogen, casein, soy protein, whey protein (especially whey milk protein), and wheat protein.

An especially preferred binder is hydroxypropyl starch.

Alternatively, the binder preferably comprises at least one member selected from the group consisting of: (A) at least one member selected from the group consisting of polysaccharide esterified with an anhydride of the formula: [CH₃(CH₂)ₙ-CO]₂-O, where n = from 0 to 6, as well as alkyl-substituted anhydrides thereof; (B) CH₃(CH₂)ₙ-COCl, where n = from 0 to 6; (C) alkyl-substituted acid chlorides of CH₃(CH₂)ₙ-COCl, where n = from 0 to 6; (D) modified polysaccharide which results from the etherification of a base polysaccharide with at least one member selected from the group consisting of acrolein, epichlorohydrin, ethylene glycol, ethylene glycol oligomer, propylene glycol, propylene glycol oligomer, ethylene oxide, and propylene oxide. Preferably, the second layer comprises at least one member selected from the group consisting of polyamide 6, polyamide 66, polyamide 9, polyamide 10, polyamide 11, polyamide 12, polyamide 69, polyamide 610, polyamide 612, polyamide 6I, polyamide 6T, polyamide MXD6, copolyamide, polyethylene homopolymer, ethylene/alpha-olefin copolymer, anhydride-modified ethylene/alpha-olefin copolymer, ethylene/vinyl acetate copolymer, ethylene/acrylic acid copolymer, ionomer (especially ionomers of ethylene/methacrylic acid and ethylene/acrylic acid), ethylene/methacrylic acid copolymer, anhydride-modified ethylene/methacrylic acid copolymer, polypropylene homopolymer, propylene/C₄₋₁₀ alpha-olefin copolymer, polyethylene terephthalate, PETG, and polyalkylhydroxy acid.

Preferably, the additive is bound to the binder with at least one member selected from the group consisting of a covalent bond, an ionic bond, a hydrogen bond, and a dipole-dipole interaction.

Preferably, the first layer further comprises a crosslinking agent. Preferably, the crosslinking agent comprises a compound with at least two carbonyl groups. Preferably, the crosslinking agent comprises at least one member selected from the group consisting of malose, glutaraldehyde, glyoxal, dicarboxylic acid, ester of dicarboxylic acid, urea formaldehyde, melamine formaldehyde, trimethylol-melamine, organic compound containing at least 2 sulfhydryl groups, and a component in liquid smoke comprising at least two carbonyl groups. The presence of the crosslinking agent results in a crosslinked polymer network.

The film can be a heat-shrinkable film or a non-heat shrinkable film.

In one preferred embodiment, the second layer is directly adhered to the first layer.

Alternatively, a third layer can be between the first layer and the second layer. Preferably, the third layer comprises at least one member selected from the group consisting of polysaccharide and protein.

Alternatively, the multilayer film further comprises a third layer, with the first layer being between the second layer and the third layer. Preferably, the third layer comprises at least one member selected from the group consisting of polysaccharide and protein. More preferably, at least one member selected from the group consisting of alginate, methyl cellulose, hydroxypropyl starch, hydroxypropylmethyl starch, hydroxymethyl cellulose, hydroxypropyl cellulose, hydroxypropylmethyl cellulose, carboxymethyl cellulose, cellulose esterified with 1-octenyl succinic anhydride, chitin, and chitosan, gliadin, glutenin, globulin, albumin (especially in the form of gluten), prolamin (especially corn zein), thrombin, pectin; canageenan, konjac flour-glucomannin, fibrinogen, casein (especially casein milk protein), soy protein, whey protein (especially whey milk protein), and wheat protein. This third layer, which serves as an "overcoat" over the first layer, can further comprise an additive, such as one or more of the additives present in the first layer, and/or a meat adhesion enhancing additive and/or a crosslinking agent. Preferably, the multilayer film further comprises a fourth layer which is between the first layer and the second layer. Preferably, the fourth layer serves as a primer layer, as described above.

Preferably, the first layer further comprises an encapsulating agent comprising at least one member selected from the group consisting of carbohydrate and protein. Preferably, the encapsulating agent comprises at least one member selected from the group consisting of gum and cellulose. More preferably, the encapsulating agent comprises at least one member selected from the group consisting of corn syrup, dextrin, starch, sucrose, agar gum, carrageenan, gum arabic, sodium alginate, carboxymethylcellulose, ethyl cellulose, methyl cellulose, albumin, casein, gelatin, and gluten.

The first layer can further comprise a glazing agent which comprises at least one member selected from the group consisting of modified food starch from waxy maize, tapioca dextrin, and corn syrup solids from waxy maize.

The first layer can further comprise a plasticizer. Preferably, the plasticizer further comprises at least one member selected from the group consisting of polyol, sodium citrate, and triethyl citrate.

The packaged product can further comprise a third layer comprising at least one member selected from the group consisting of polyolefin, polyamide, and polyester; more preferably, at least one member selected from the group consisting of ethylene/vinyl alcohol copolymer, vinylidene chloride copolymer, polyamide, polyvinyl alcohol, polyhydroxyaminoether, and polyalkylene carbonate, ethylene/acrylic acid copolymer, polyethylene terephthalate, and ionomer. Alternatively, the third layer can be an inner layer, with the multilayer film further comprising a fourth layer comprising at least one member selected from the group consisting of polyolefin, polyamide, and polyester; more preferably: ethylene/vinyl alcohol copolymer, vinylidene chloride copolymer, polyamide, polyvinyl alcohol, polyhydroxyaminoether, and polyalkylene carbonate, ethylene/acrylic acid copolymer, polyester, and polyethylene terephthalate.

In a preferred multilayer film, the second layer can serve as a seal layer and comprise at least one member selected from the group consisting of polyolefin, polyamide, and polyester, with the film further comprising (i) a third layer which serves as an O₂-barrier layer comprising at least one member selected from the group consisting of at least one member selected from the group consisting of ethylene/vinyl alcohol copolymer, polyvinylidene chloride, polyamide, polyalkylene carbonate, polyvinyl alcohol, and polyester; (ii) a fourth layer which serves as a first tie layer and which is on a first side of the O₂-barrier layer and which comprises at least one member selected from the group consisting of modified ethylene/alpha-olefin copolymer, modified ethylene/unsaturated ester copolymer, modified ethylene/unsaturated acid copolymer, polystyrene and polyurethane; (iii) a fifth layer which serves as a second tie layer and which is on a second side of the O₂-barrier layer and which comprises comprising at least one member selected from the group consisting of modified ethylene/alpha-olefin copolymer, modified ethylene/unsaturated ester copolymer, modified ethylene/unsaturated acid copolymer, polystyrene and polyurethane; and, (iv) a sixth layer which serves as an abuse layer and which comprises at least one member selected from the group consisting of polyolefin, polyamide, polyester, and polyurethane. More preferably, the film further comprises: (i) a seventh layer which serves as a strength layer and which is between the second layer and the fourth layer, and which comprises at least one member selected from the group consisting of polyolefin, polyamide, polyester, and polyurethane; (ii) a eighth layer which serves as a strength and balance layer and which is between the fifth layer and the sixth layer, and which comprises at least one member selected from the group consisting of polyolefin, polyamide, polyester, and polyurethane; and, (iii) a ninth layer which serves as a strength and moisture barrier layer and which between the fifth layer and the sixth layer, and which comprises polyamide.

As a second aspect, the present invention pertains to a process for preparing a food product, comprising: (A) cooking a meat product; (B) packaging the cooked meat product in a multilayer film comprising: (1) a first layer, which is an inside layer, and which comprises: (a) a flavor; (b) a binder comprising at least one member selected from the group consisting of polysaccharide and protein, (2) a second layer comprising a non-water-soluble thermoplastic polymer comprising at least one member selected from the group consisting of polyolefin, polyamide, polyester, polyvinylidene chloride, polyvinyl chloride, and polystyrene. The flavor and the binder are present throughout a thickness of the first layer. The flavor is in the first layer. The first layer is between the second layer and the cooked meat product.

The cooked meat product can be (a) frozen and/or (b) packaged under vacuum, and/or (c) stored in an unpackaged state before the cooked meat product is packaged in the film. The meat product can be cooked and thereafter packaged and thereafter frozen.

As a third aspect, the present invention pertains to a process for making a coated multilayer film, comprising: (A) preparing a coating composition,(B) emulsifying the coating composition until the average particle size of the flavor component is from about 0.5 micron to about 50 microns; (C) coating an outer surface of a substrate film with the emulsified coating composition; and (D) drying the coating composition, whereby the coating composition becomes a first layer of a resulting coated film, the substrate film comprising at least a second layer which comprises at least one member selected from the group consisting of polyolefin, polyamide, polyester, polyvinylidene chloride, polyvinyl chloride, and polystyrene. The coating composition is prepared by combining (i) water; (ii) a flavor component; and (iii) a binder comprising at least one member selected from the group consisting of polysaccharide and protein. Preferably, the emulsification of the coating composition is carried out until the average particle size of the flavor component is from about 1 to about 30 microns; still more preferably, from about 1 micron to about 15 microns; yet still more preferably, from about 2 to about 4 microns.

As a fourth aspect, the present invention is directed to a process for making a coated multilayer film, comprising: (A) preparing an additive blend by combining and blending: (i) water; (ii) a flavor component; and, (iii) encapsulating agent which comprises at least one member selected from the group consisting of carbohydrate and protein; (B) preparing a binder blend by combining and mixing water and a binder comprising at least one member selected from the group consisting of polysaccharide and protein; (C) blending the additive blend with the binder blend, so that a coating blend is produced; (D) coating an outer surface of a substrate film with the coating blend; and (E) drying the coating blend while the coating blend is on a surface of the substrate film, so that the coating blend forms a first layer of a resulting coated film. The substrate film comprises at least a second layer of the resulting coated film. The substrate film comprises at least one member selected from the group consisting of polyolefin, polyamide, polyester, polyvinylidene chloride, polyvinyl chloride, and polystyrene. Preferably, the encapsulating agent comprises at least one member selected from the group consisting of gum and cellulose.

Under both the third and fourth aspects of the present invention, the coating composition can be applied to the film using at least one member selected from the group consisting of roll, gravure, flexographic, meyer rod, reverse angle doctor blade, knife over roll, two roll reverse, three roll reverse, comma roll, and lip coating.

### Brief Description of the Drawings

Figure 1 illustrates a schematic view ofa preferred process for making a multilayer film for use in accordance with the present invention.

Figure 2 illustrates a lay-flat view of a bag for use in accordance with the present invention.

Figure 3 illustrates a packaged product in accordance with the present invention.

Figure 4 illustrates a perspective view of a packaged product in accordance with the present invention.

Figure 5A illustrates a first embodiment of a cross-sectional view through line 5-5 of the packaged product illustrated in Figure 4.

Figure 5B illustrates a second embodiment of a cross-sectional view through line 5-5 of the packaged product illustrated in Figure 4.

Figure 5C illustrates a third embodiment of a cross-sectional view through line 5-5 of the packaged product illustrated in Figure 4.

Figure 6 illustrates a perspective view of an alternative packaged product according to the present invention.

### Detailed Description of the Invention

As used herein, the word "meat" is inclusive of at least beef, pork, poultry (especially chicken and turkey), fish, and lamb, and meat substitutes.

As used herein, the phrase "product surrounded by a...film" refers to a film which extends over at least 20% of the surface area of the product; more preferably 100% of the surface of the product. Although the film can be in actual contact with the product, or can be separated from the surface of the product by a short distance (e.g., less than 5 millimeters), the film can also be spaced from the product (e.g., up to 10 centimeters) as, for example, a lidstock over a cooked meat product in a tray.

As used herein, the phrase "multilayer film...comprising... a...layer comprising..." refers to a film layer which is as of that time integral with the film and which as of that time forms a portion of the film. In other words, all layers which the film "comprises" are layers which are still substantially attached to the film, i.e., if the product is removed from the package at any given point in time, whether a layer substantially remains with the film is determinative of whether the film at that point comprises the layer.

As used herein, the phrase "present throughout a thickness of a layer" refers to the presence of the named component in each of 5 strata of equal thickness, into which the "layer" is theoretically divided for the purposes of determination of the presence of one or more components. If the component under consideration is present in each strata even in an amount as low as 1% of its presence in any one or more of the other 4 theoretical strata, then the component is deemed to be present throughout the layer.

As used herein, the phrase "glazing agent" refers to compositions which have traditionally been used in stocks or icings which were cooked to a thin paste and applied to the surface of meat, fish, vegetable, fruits, or nuts to impart a glaze thereto.

As used herein, the prefix "alkyl" refers to, and is inclusive of, both saturated and unsaturated side chains. In other words, in order to simplify the text herein, the prefix "alkyl" is inclusive of both "traditional alkyl" sidechains as well as "traditional alkenyl" and "traditional alkynyl" sidechains.

As used herein, the term "binder" refers to a substance which adheres to an flavor and/or a surface comprising a thermoplastic polymer and/or a protein-containing product, such as meat. For example, a preferred polysaccharide binder for use in the present invention is hydroxypropyl starch, e.g., ™ hydroxypropyl starch. This binder is capable of holding, entrapping, or binding to flavors, while at the same time being capable of adhering to a surface comprising a thermoplastic polymer.

As used herein, the terms "flavor" and "flavorant" refer to, and are inclusive of, spice (including, of course, pepper). Grilled chicken flavorant (in the form of an oil) is an especially preferred flavorant. Other preferred flavorants include lemon oil, orange oil, honey, clove, cinnamon, and sugar (especially brown sugar). As used herein, both of these terms are inclusive of substances which serve as flavors, as well as substances which serve as fragrances.

As used herein, the term "film" is used in a generic sense to include plastic web, regardless of whether it is film or sheet. Preferably, films of and used in the present invention have a thickness of 0.25 mm or less. As used herein, the term "package" refers to packaging materials configured around a product being packaged. The phrase "packaged product," as used herein, refers to the combination of a product which is surrounded by a packaging material.

As used herein, the phrase "multilayer film" refers to the combination of a film comprising a first layer which is an outer layer and which contains the binder and the flavor, in combination with a second layer which comprises a thermoplastic polymer. Although the first layer is preferably directly adhered to the second layer, the film can optionally contain one or more additional film layers, such as an oxygen-barrier layer with or without tie layers in association therewith, additional bulk and/or strength layers, etc. The first layer is preferably applied as a coating on a substrate film which comprises the second film layer, alone or in combination with additional film layers as described immediately above. The first layer is always an outer film layer. In the packaged product according to the present invention, the first layer is the inside layer of the film.

As used herein, the phrase "drying," as used with reference to the process according to the present invention, refers to the drying of the coating which forms an outer layer of the film. Preferably, drying prevents the outer layer of the film from exhibiting substantial blocking, i.e., sticking to a degree that blocking or delamination occurs, with respect to adjacent surfaces of, for example, a film (including both the same or another film), and/or other articles (e.g., metal surfaces, etc.). Preferably, the outer layer has a moisture content of less than about 25 percent, based on the weight of the outer layer; more preferably, from about 0 to 25 percent; still more preferably, from about 0 to 10 percent; yet still more preferably, from about 0 to 5 percent.

As used herein, the term "seal" refers to any seal of a first region of a film surface to a second region of a film surface, wherein the seal is formed by heating the regions to at least their respective seal initiation temperatures. The sealing can be performed by any one or more of a wide variety of manners, such as using a heated bar, hot air, infrared radiation, ultrasonic sealing, etc., and even the use of clips on, for example, a shirred casing, etc. However, a multilayer film having a plurality of coextruded layers or layer(s) extrusion coated thereon are not considered to be heat-sealed to one another by virtue of the coextrusion process or the extrusion coating process.

As used herein, the phrases "seal layer," "sealing layer," "heat seal layer," and "sealant layer," refer to an outer film layer, or layers, involved in the sealing of the film to itself, another film layer of the same or another film, and/or another article which is not a film. It should also be recognized that in general, up to the outer 3 mils of a film can be involved in the sealing of the film to itself or another layer. With respect to packages having only fin-type seals, as opposed to lap-type seals, the phrase "sealant layer" generally refers to the inside film layer of a package, as well as supporting layers within 3 mils of the inside surface of the sealant layer, the inside layer frequently also serving as a food contact layer in the packaging of foods. In general, sealant layers employed in the packaging art have included thermoplastic polymers, such as polyolefin, polyamide, polyester, and polyvinyl chloride.

As used herein, the phrases "food-contact layer" and "meat-contact layer" refer to a layer of a multilayer film which is in direct contact with the food/meat in the package comprising the film. In a multilayer film, a food-contact layer is always an outer film layer, as the food-contact layer is in direct contact with the food product within the package. The food-contact layer is an inside layer in the sense that with respect to the packaged food product, the food-contact layer is the inside layer (i.e., innermost layer) of the package, this inside layer being in direct contact with the food. As used herein, the phrases "food-contact surface" and "meat-contact surface" refer to an outer surface of a food contact layer, this outer surface being in direct contact with the food within the package.

As used herein, the term "barrier", and the phrase "barrier layer", as applied to films and/or film layers, are used with reference to the ability of a film or film layer to serve as a barrier to one or more gases. In the packaging art, oxygen (i.e., gaseous O₂) barrier layers have included, for example, hydrolyzed ethylene/vinyl acetate copolymer (designated by the abbreviations "EVOH" and "HEVA", and also referred to as "ethylene/vinyl alcohol copolymer"), polyvinylidene chloride, polyamide, polyester, polyacrylonitrile, etc., as known to those of skill in the art.

As used herein, "EVOH" refers to ethylene vinyl alcohol copolymer. EVOH includes saponified or hydrolyzed ethylene vinyl acetate copolymers, and refers to a vinyl alcohol copolymer having an ethylene comonomer, and prepared by, for example, hydrolysis of vinyl acetate copolymers, or by chemical reactions with polyvinyl alcohol. The degree of hydrolysis is preferably from about 50 to 100 mole percent; more preferably, from about 85 to 100 mole percent.

As used herein, the phrase "abuse layer", as well as the phrase "puncture-resistant layer", refer to an outer film layer and/or an inner film layer, so long as the film layer serves to resist abrasion, puncture, and other potential causes of reduction of package integrity, as well as potential causes of reduction of package appearance quality.

As used herein, the term "oriented" refers to a polymer-containing material which has been elongated (generally at an elevated temperature called the orientation temperature), followed by being "set" in the elongated configuration by cooling the material while substantially retaining the elongated dimensions. This combination of elongation at elevated temperature followed by cooling causes an alignment of the polymer chains to a more parallel configuration, thereby altering various mechanical properties of the film. Upon subsequently heating unrestrained, unannealed, oriented polymer-containing material to its orientation temperature, heat shrinkage is produced almost to the original dimensions, i.e., pre-elongation dimensions. The term "oriented," is herein used with reference to oriented films, which can undergo orientation in any one or more of a variety of manners.

As used herein, the term "polymer" refers to the product of a polymerization reaction, and is inclusive of homopolymers, copolymers, terpolymers, tetrapolymers, etc. In general, the layers of a film can consist essentially of a single polymer, or can have additional polymers together therewith, i.e., blended therewith.

As used herein, the term "copolymer" refers to polymers formed by the polymerization reaction of at least two different monomers. For example, the term "copolymer" includes the copolymerization reaction product of ethylene and an alpha-olefin, such as 1-hexene. The term "copolymer" is also inclusive of, for example, the copolymerization of a mixture of ethylene, propylene, 1-hexene, and 1-octene. As used herein, the term "copolymerization" refers to the simultaneous polymerization of two or more monomers. The term "copolymer" is also inclusive of random copolymers, block copolymers, and graft copolymers.

As used herein, a copolymer identified in terms of a plurality of monomers, e.g., "propylene/ethylene copolymer", refers to a copolymer in which either monomer may copolymerize in a higher weight or molar percent than the other monomer or monomers. However, the first listed monomer preferably polymerizes in a higher weight percent than the second listed monomer, and, for copolymers which are terpolymers, quadripolymers, etc., preferably the first monomer copolymerizes in a higher weight percent than the second monomer, and the second monomer copolymerizes in a higher weight percent than the third monomer, etc.

As used herein, terminology employing a "/" with respect to the chemical identity of a copolymer (e.g., "an ethylene/alpha-olefin copolymer"), identifies the comonomers which are copolymerized to produce the copolymer. As used herein, "ethylene alpha-olefin copolymer" is the equivalent of "ethylene/alpha-olefin copolymer."

As used herein, copolymers are identified, i.e., named, in terms of the monomers from which the copolymers are produced. For example, the phrase "propylene/ethylene copolymer" refers to a copolymer produced by the copolymerization of both propylene and ethylene, with or without additional comonomer(s). As used herein, the phrase "met" refers to a unit of a polymer, as derived from a monomer used in the polymerization reaction. For example, the phrase "alpha-olefin mer" refers to a unit in, for example, an ethylene/alpha-olefin copolymer, the polymerization unit being that "residue" which is derived from the alpha-olefin monomer after it reacts to become a portion of the polymer chain, i.e., that portion of the polymer contributed by an individual alpha-olefin monomer after it reacts to become a portion of the polymer chain.

As used herein, the phrase "heterogeneous polymer" refers to polymerization reaction products of relatively wide variation in molecular weight and relatively wide variation in composition distribution, i.e., polymers made, for example, using conventional Ziegler-Natta catalysts. Heterogeneous polymers are useful in various layers of the film used in the present invention. Such polymers typically contain a relatively wide variety of chain lengths and comonomer percentages.

As used herein, the phrase "heterogeneous catalyst" refers to a catalyst suitable for use in the polymerization of heterogeneous polymers, as defined above. Heterogeneous catalysts are comprised of several kinds of active sites which differ in Lewis acidity and steric environment. Ziegler-Natta catalysts are heterogeneous catalysts. Examples of Ziegler-Natta heterogeneous systems include metal halides activated by an organometallic co-catalyst, such as titanium chloride, optionally containing magnesium chloride, complexed to trialkyl aluminum and may be found in patents such as U.S. Patent No. 4,302,565, to GOEKE, et. al., and U.S. Patent No. 4,302,566, to KAROL, et. al., both of which are hereby incorporated, in their entireties, by reference thereto.

As used herein, the phrase "homogeneous polymer" refers to polymerization reaction products of relatively narrow molecular weight distribution and relatively narrow composition distribution. Homogeneous polymers can be used in various layers of multilayer films useful in the present invention. Homogeneous polymers are structurally different from heterogeneous polymers, in that homogeneous polymers exhibit a relatively even sequencing of comonomers within a chain, a mirroring of sequence distribution in all chains, and a similarity of length of all chains, i.e., a narrower molecular weight distribution. Furthermore, homogeneous polymers are typically prepared using metallocene, or other single-site type catalysis, rather than using Ziegler Natta catalysts.

More particularly, homogeneous ethylene/alpha-olefin copolymers may be characterized by one or more methods known to those of skill in the art, such as molecular weight distribution (M_{w}/Mₙ), composition distribution breadth index (CDBI), narrow melting point range, and single melt point behavior. The molecular weight distribution (M_{w}/Mₙ), also known as "polydispersity," may be determined by gel permeation chromatography. Homogeneous ethylene/alpha-olefin copolymers which can be used in the present invention preferably have an M_{w}/Mₙ of less than 2.7; more preferably from about 1.9 to 2.5; still more preferably, from about 1.9 to 2.3. The composition distribution breadth index (CDBI) of such homogeneous ethylene/alpha-olefin copolymers will generally be greater than about 70 percent. The CDBI is defined as the weight percent of the copolymer molecules having a comonomer content within 50 percent (i.e., plus or minus 50%) of the median total molar comonomer content. The CDBI of linear polyethylene, which does not contain a comonomer, is defined to be 100%. The Composition Distribution Breadth Index (CDBI) is determined via the technique of Temperature Rising Elution Fractionation (TREF). CDBI determination clearly distinguishes homogeneous copolymers (i.e., narrow composition distribution as assessed by CDBI values generally above 70%) from VLDPEs available commercially which generally have a broad composition distribution as assessed by CDBI values generally less than 55%. TREF data and calculations therefrom for determination of CDBI of a copolymer is readily calculated from data obtained from techniques known in the art, such as, for example, temperature rising elution fractionation as described, for example, in Wild et. al., J. Poly. Sci. Poly. Phys. Ed., Vol. 20, p.441 (1982). Preferably, the homogeneous ethylene/alpha-olefin copolymers have a CDBI greater than about 70%, i.e., a CDBI of from about 70% to 99%. In general, the homogeneous ethylene/alpha-olefin copolymers useful in the present invention also exhibit a relatively narrow melting point range, in comparison with "heterogeneous copolymers", i.e., polymers having a CDBI of less than 55%. Preferably, the homogeneous ethylene/alpha-olefin copolymers exhibit an essentially singular melting point characteristic, with a peak melting point (Tₘ), as determined by Differential Scanning Colorimetry (DSC), of from about 60°C to 105°C. Preferably the homogeneous copolymer has a DSC peak Tₘ of from about 80°C to 100°C. As used herein, the phrase "essentially single melting point" means that at least about 80%, by weight, of the material corresponds to a single Tₘ peak at a temperature within the range of from about 60°C to 105°C, and essentially no substantial fraction of the material has a peak melting point in excess of about 115°C., as determined by DSC analysis. DSC measurements are made on a Perkin Elmer System 7 Thermal Analysis System. Melting information reported are second melting data, i.e., the sample is heated at a programmed rate of 10°C./min. to a temperature below its critical range. The sample is then reheated (2nd melting) at a programmed rate of 10°C/min.

A homogeneous ethylene/alpha-olefin copolymer can, in general, be prepared by the copolymerization of ethylene and any one or more alpha-olefin. Preferably, the alpha-olefin is a C₃-C₂₀ alpha-monoolefin, more preferably, a C₄-C₁₂ alpha-monoolefin, still more preferably, a C₄-C₈ alpha-monoolefin. Still more preferably, the alpha-olefin comprises at least one member selected from the group consisting of butene-1, hexene-1, and octene-1, i.e., 1-butene, 1-hexene, and 1-octene, respectively. Yet still more preferably, the alpha-olefin comprises octene-1, and/or a blend of hexene-1 and butene-1.

Processes for preparing and using homogeneous polymers are disclosed in U.S. Patent No. 5,206,075, to HODGSON, Jr., U.S. Patent No. 5,241,031, to MEHTA, and PCT International Application WO 93/03093, each of which is hereby incorporated by reference thereto, in its entirety. Further details regarding the production and use of homogeneous ethylene/alpha-olefin copolymers are disclosed in PCT International Publication Number WO 90/03414, and PCT International Publication Number WO 93/03093, both of which designate Exxon Chemical Patents, Inc. as the Applicant, and both of which are hereby incorporated by reference thereto, in their respective entireties.

Still another species of homogeneous ethylene/alpha-olefin copolymers is disclosed in U.S. Patent No. 5,272,236, to LAI, et. al., and U.S. Patent No. 5,278,272, to LAI, et. al., both of which are hereby incorporated by reference thereto, in their respective entireties.

As used herein, the term "polyolefin" refers to any polymerized olefin, which can be linear, branched, cyclic, aliphatic, aromatic, substituted, or unsubstituted. Exemplary polyolefins include homopolymers of one or more olefins, copolymers of olefin, copolymers of an olefin and an non-olefinic comonomer copolymerizable with the olefin, such as vinyl monomers, modified polymers thereof, and the like. More specific examples include polyethylene homopolymer, polypropylene homopolymer, polybutene, ethylene/alpha-olefin copolymer, propylene/alpha-olefin copolymer, butene/alpha-olefin copolymer, ethylene/vinyl acetate copolymer, ethylene/vinyl alcohol copolymer, ethylene/ethyl acrylate copolymer, ethylene/butyl acrylate copolymer, ethylene/methyl acrylate copolymer, ethylene/acrylic acid copolymer, ethylene/methacrylic acid copolymer, modified polyolefin resin, ionomer resin, polymethylpentene, etc. Modified polyolefin resin is inclusive of modified polymer prepared by copolymerizing the homopolymer of the olefin or copolymer thereof with an unsaturated carboxylic acid, e.g., maleic acid, fumaric acid or the like, or a derivative thereof such as the anhydride, ester or metal salt or the like. It could also be obtained by incorporating into the olefin homopolymer or copolymer, an unsaturated carboxylic acid, e.g., maleic acid, fumaric acid or the like, or a derivative thereof such as the anhydride, ester or metal salt or the like.

As used herein, the phrases "ethylene alpha-olefin copolymer", and "ethylene/alphaolefin copolymer", refer to such heterogeneous materials as low density polyethylene (LDPE), medium density polyethylene (MDPE), linear low density polyethylene (LLDPE), and very low and ultra low density polyethylene (VLDPE and ULDPE); as well as to such homogeneous ethylene/alpha olefin copolymers as: metallocene-catalyzed EXACT (TM) linear homogeneous ethylene/alpha olefin copolymer resins obtainable from the Exxon Chemical Company, of Baytown, Texas, homogeneous substantially linear ethylene/alpha-olefin copolymers having long chain branching (e.g., copolymers known as AFFINITY (TM) resins, and ENGAGE (TM) resins, available from the Dow Chemical Company, of Midland, Michigan), as well as TAFMER (TM) linear homogeneous ethylene/alpha-olefin copolymer resins obtainable from the Mitsui Petrochemical Corporation. Both the heterogeneous polymers and homogeneous polymers referred to above generally include copolymers of ethylene with one or more comonomers selected from C₄ to C₁₀ alpha-olefin such as butene-1 (i.e., 1-butene), hexene-1, octene-1, etc. While LDPE and MDPE are more highly branched than LLDPE, VLDPE, ULDPE, EXACT (TM) resin, and TAFMER (TM) resin, this latter group of resins has a relatively large number of short branches rather than the longer branches present in LDPE and MDPE. AFFINITY (TM) resins and ENGAGE (TM) resins have a relatively large number of short branches in combination with a relatively small number of long-chain branches. LLDPE has a density usually in the range of from about 0.91 grams per cubic centimeter to about 0.94 grams per cubic centimeter.

In general, the ethylene/alpha-olefin copolymer comprises a copolymer resulting from the copolymerization of from about 80 to 99 weight percent ethylene and from I to 20 weight percent alpha-olefin. Preferably, the ethylene alpha-olefin copolymer comprises a copolymer resulting from the copolymerization of from about 85 to 95 weight percent ethylene and from 5 to 15 weight percent alpha-olefin.

As used herein, terms identifying polymers, such as "polyamide", "polyester", "polyurethane", etc. are inclusive of not only polymers comprising repeating units derived from monomers known to polymerize to form a polymer of the named type, but are also inclusive of comonomers, derivatives, etc. which can copolymerize with monomers known to polymerize to produce the named polymer. For example, the term "polyamide" encompasses both polymers comprising repeating units derived from monomers, such as caprolactam, which polymerize to form a polyamide, as well as copolymers derived from the copolymerization of caprolactam with a comonomer which when polymerized alone does not result in the formation of a polyamide. Furthermore, terms identifying polymers are also inclusive of "blends" of such polymers with other polymers of a different type.

As used herein, the phrase "modified polymer", as well as more specific phrases such as "modified ethylene vinyl acetate copolymer", and "modified polyolefin" include such polymers having an anhydride functionality, as defined immediately above, grafted thereon and/or copolymerized therewith and/or blended therewith. Preferably, such modified polymers have the anhydride functionality grafted on or copolymerized therewith, as opposed to merely blended therewith.

As used herein, the phrase "anhydride functionality" refers to any form of anhydride functionality, such as the anhydride of maleic acid, fumaric acid, etc., whether blended with one or more polymers, grafted onto a polymer, or copolymerized with a polymer, and, in general, is also inclusive of derivatives of such functionalities, such as acids, esters, and metal salts derived therefrom.

Film useful in the present invention may be monolayer film or multilayer film. If multilayer, preferably the film has a total of from 1 to 20 layers; more preferably, from 2 to 12 layers and still more preferably, from 4 to 9 layers. The multilayer film can have any total number of layers and any total thickness desired, so long as the film provides the desired properties for the particular packaging operation in which the film is used, e.g. O₂-barrier characteristics, free shrink, shrink tension, optics, modulus, seal strength, etc.

As used herein, the phrases "inner layer" and "internal layer" refer to any layer, of a multilayer film, having both of its principal surfaces directly adhered to another layer of the film.

As used herein, the phrase "inside layer" refers to an outer film layer, of a multilayer film packaging a product, or an article suitable for use in packaging a product (such as a bag or casing), which is closest to the product, relative to the other layers of the multilayer film. "Inside layer" also is used with reference to the innermost layer of a plurality of concentrically arranged layers simultaneously coextruded through an annular die.

As used herein, the phrase "outer layer" refers to any film layer having less than two of its principal surfaces directly adhered to another layer of the film. The phrase is inclusive of monolayer and multilayer films. All multilayer films have two, and only two, outer layers, each of which has a principal surface adhered to only one other layer of the multilayer film. In monolayer films, there is only one layer, which, of course, is an outer layer in that neither of its two principal surfaces are adhered to another layer of the film.

As used herein, the phrase "outside layer" refers to the outer layer, of a multilayer film packaging a product, or an article suitable for use in packaging a product (such as a bag or casing), which is furthest from the product relative to the other layers of the multilayer film. "Outside layer" also is used with reference to the outermost layer of a plurality of concentrically arranged layers simultaneously coextruded through an annular die.

As used herein, the phrase "directly adhered", as applied to film layers, is defined as adhesion of the subject film layer to the object film layer, without a tie layer, adhesive, or other layer therebetween. In contrast, as used herein, the word "between", as applied to a film layer expressed as being between two other specified layers, includes both direct adherence of the subject layer between to the two other layers it is between, as well as including a lack of direct adherence to either or both of the two other layers the subject layer is between, i.e., one or more additional layers can be imposed between the subject layer and one or more of the layers the subject layer is between.

As used herein, the term "core", and the phrase "core layer", as applied to multilayer films, refer to any inner film layer which has a primary function other than serving as an adhesive (i.e., tie layer, which adheres two incompatible layers) for adhering two layers to one another. Usually, the core layer or layers provide the multilayer film with a desired level of strength, i.e., modulus, and/or optics, and/or added abuse resistance, and/or specific impermeability.

As used herein, the phrase "tie layer" refers to any inner film layer having the primary purpose of adhering two layers to one another. Tie layers can comprise any polymer having a polar group thereon, or any other polymer which provides sufficient interlayer adhesion to adjacent layers comprising otherwise nonadhering polymers. Suitable polymers include polyolefins, such as those incorporating acids, esters, anhydrides or salts of carboxylic acids; and polar, non-polyolefinic materials such as polyesters, ethylene vinyl alcohol copolymer, etc.

As used herein, the phrase "skin layer" refers to an outside layer of a multilayer film in packaging a product, this skin layer being subject to abuse.

As used herein, the phrase "bulk layer" refers to any layer of a film which is present for the purpose of increasing the abuse-resistance, toughness, modulus, etc., of a multilayer film. Bulk layers generally comprise polymers which are inexpensive relative to other polymers in the film which provide some specific purpose unrelated to abuse-resistance, modulus, etc.

The names "first layer", "second layer", as used herein, are generally indicative of the manner in which a multilayer film structure is built up. That is, in general, the first layer can be present without any of the additional layers described, or the first and second layers can be present without any of the additional layers described, etc.

As used herein, the phrases "heat-shrinkable," "heat-shrink," and the like, refer to the tendency of a film, generally an oriented film, to shrink upon the application of heat, i.e., to contract upon being heated, such that the size (area) of the film decreases while the film is in an unrestrained state. Likewise, the tension of a heat-shrinkable film increases upon the application of heat if the film is restrained from shrinking. As a corollary, the phrase "heat-contracted" refers to a heat-shrinkable film, or a portion thereof, which has been exposed to heat such that the film or portion thereof is in a heat-shrunken state, i.e., reduced in size (unrestrained) or under increased tension (restrained). Preferably, the heat-shrinkable film for use in the present invention has a total free shrink (i.e., machine direction plus transverse direction), as measured by ASTM D 2732, of at least as 5 percent at 185°C, more preferably at least 7 percent, still more preferably, at least 10 percent, and, yet still more preferably, at least 20 percent.

If heat-shrinkable, the film preferably has a free shrink of from about 5-70 percent in at least one direction (i.e., the longitudinal (L) or transverse (T) direction) at 185°F; more preferably, from about 10-50 percent at 185°F; and, still more preferably, from about 15-35 percent at 185°F. For conversion to bags and casings, preferably the film is biaxially oriented, and preferably the film has a free shrink, at 185°F, of at least 10 percent in each direction (L and T); more preferably, at least 15 percent in each direction. For casing end use, preferably the film has a total free shrink (L+T) of from about 30 to 50 percent at 185°F. For bag end-use, preferably the total free shrink is even higher, i.e., preferably at least 50% (L+T), more preferably from 50 to 120%. For use as a thermoformed article, preferably the film has a total free shrink (before thermoforming) of from 0 to 10% (L + T), more preferably, from 1 to 5 percent (L + T). Alternately, the oriented film article can be heat-set. Heat-setting can be done at a temperature from about 60-200°C, more preferably 70-150°C and, even more preferably, 80-90°C.

The multilayer film used in the present invention can have any total thickness desired, so long as the film provides the desired properties for the particular packaging operation in which the film is used. Preferably, the film used in the present invention has a total thickness (i.e., a combined thickness of all layers), of from about 0.3 to 15 mils (1 mil equals 0.001 inch); more preferably, from about I to 10 mils; and still more preferably, from 1.5 to 8 mils. For shrinkable casings, the range from 1.5 - 3 mils is even more preferred while for laminates used in cook-in packaging, the range from 4-8 mils is even more preferred.

The film article preferably has a modulus ranging from about 5,000 to 500,000 psi, more preferably from about 10,000 to 300,000 psi, and most preferably from about 40,000 to 200,000 psi. The food-contact layer itselfmay have a modulus ranging from about 3,000 to 500,000 psi.

Exemplary films which can be coated with a coating formulation comprising a binder and an flavor in accordance with the present invention, which can thereafter be used in accordance with the present invention, include the films disclosed in: (a) U.S. Serial No. 669,728, filed June 26, 1996, in the name of Ram K. Ramesh; (b) U.S. Serial No. 08/539,919, filed October 6, 1995, in the name of Ram K. Ramesh; U.S. Serial No. 57,587, in the name of Lorenzo et al, filed Dec. 22, 1995; U.S. Patent No. 4,287,151, to ESAKOV, et. al., issued Sept. 1, 1981; and U.S. Serial No. 617,720, in the name ofBeckwith et al., filed April 1, 1996. Each of these documents is hereby incorporated in its entirety, by reference thereto. Film No. 1 and Film No. 2, described in detail below, are preferred films for subsequent coating with a coating formulation in accordance with the process of the present invention.

The following multilayer film structures are useful in accordance with the present invention. In the following film structures, the individual layers are shown in the order in which they would appear in the film:
SEAL / FOOD-CONTACT (coating)
ABUSE / SEAL / FOOD-CONTACT (coating)
ABUSE / BARRIER / SEAL / FOOD-CONTACT (coating)
ABUSE / TIE / BARRIER / TIE / SEAL / FOOD-CONTACT (coating)
ABUSE / TIE / BARRIER / TIE / BULK / SEAL / FOOD-CONTACT (coating)
ABUSE / BULK / TIE / BARRIER / TIE / BULK / SEAL / FOOD-CONTACT (coating)
ABUSE/BULK/TIE/BARRIER/MOISTURE/TIE/BULK/SEAL/FOOD-CONTACT (coating)

The foregoing representative film structures are intended to be illustrative only and not limiting in scope.

The layer which is to be coated with the coating formulation (which contains the binder and the flavor) comprises a thermoplastic polymer. Preferably, the thermoplastic polymer comprises at least one member selected from the group consisting of polyolefin, polyamide, polyester, polyvinylchloride, polyacrylonitrile, and polyurethane. Preferably, the heat seal layer has a thickness of from about 0.1 to 4 mils; more preferably, from about 0.2 to about 1 mil; and, still more preferably, from about 0.3 to 0.8 mils. In embodiments in which the packaged product comprises a bag in which a meat product is packaged and thereafter cooked, the seal layer preferably comprises at least 10% of a total weight of the multilayer film; more preferably, from about 12% to 25% by weight of the total multilayer film. In the case of oriented films used to make bags, it is preferred that the seal layer has a thickness less than 35% by weight of the multilayer film; more preferably from about 5 to 25% by weight of the multilayer film; still more preferably, from about 10 to 20% by weight of the multilayer film; seal layers thicker than 35% can cause problems during the orientation process.

In the films, the outside heat-resistant and abuse layer preferably has a thickness of from about 0.1 to 5 mils; more preferably, from 0.2 to 3 mil; still more preferably, from 0.3 to 2 mil; and yet still more preferably, about 0.5 to 1.5 mil. Preferably, the outside heat-resistant and abuse layer comprises at least one member selected from the group consisting of polyolefin, polystyrene, polyamide, polyester, polymerized ethylene vinyl alcohol, polyvinylidene chloride, polyether, polyurethane, polycarbonate, and starch-containing polymer; more preferably, at least one member selected from the group consisting of polyolefin; still more preferably, at least one member selected from the group consisting of ethylene/alpha-olefin copolymer, propylene/alpha-olefin copolymer, butene/alpha-olefin copolymer, ethylene/unsaturated ester copolymer, and ethylene/unsaturated acid copolymer; and still more preferably, a blend of 80 weight percent ethylene vinyl acetate copolymer (having 6.5 weight percent vinyl acetate) with 20 weight percent high density polyethylene.

The film optionally (and preferably) contains an O₂-barrier layer. The O₂-barrier layer is an inner layer which is between the seal layer and the abuse layer. The O₂-barrier layer comprises a polymer having relatively high O₂-barrier characteristics. Preferably, the O₂-barrier layer has a thickness of from about 0.05 to 2 mils; more preferably, from 0.05 to 0.5 mil; yet still more preferably, from 0.1 to 0.3 mil; and even yet still more preferably, from about 0.12 to 0.17 mils. Preferably, the O₂-barrier layer comprises at least one member selected from the group consisting of polymerized ethylene vinyl alcohol (EVOH), polyvinylidene chloride, polyamide, polyester and polyalkylene carbonate; more preferably, at least one member selected from the group consisting of EVOH and polyamide; still more preferably, EVOH; yet still more preferably, EVOH having about 44 mole percent ethylene mer.

The film may optionally further contain a tie layer, also referred to by those of skill in the art as an adhesive layer. The function of a tie layer is to adhere film layers which are otherwise incompatible in that they do not form a strong bond during coextrusion or extrusion coating. Tie layer(s) suitable for use in the film have a relatively high degree of compatibility with (i.e., affinity for) the O₂-barrier layer such as polymerized EVOH, polyamide, etc., as well as a high degree of compatibility for non-barrier layers, such as polymerized ethylene/alphaolefin copolymers. In general, the composition, number, and thickness of the tie layer(s) is as known to those of skill in the art. Preferably, the tie layer(s) each have a thickness of from about 0.01 to 2 mils; more preferably, from 0.05 to 0.3 mil; and, still more preferably, from about 0.1 to 0.25 mils. Preferably, the tie layer(s) each comprise at least one member selected from the group consisting of modified polyolefin, ionomer, ethylene/unsaturated acid copolymer, ethylene/unsaturated ester copolymer, polyamide, and polyurethane; more preferably, at least one member selected from the group consisting of modified polyolefin and polyurethane; still more preferably, at least one member selected from the group consisting of modified ethylene/alpha-olefin copolymer, modified ethylene/unsaturated ester copolymer, and modified ethylene/unsaturated acid copolymer, even yet still more preferably, anhydride-grafted linear low density polyethylene.

The film may further comprise an inner layer which provides the multilayer film with desired strength, bulk, abuse, shrink, balance (i.e., anti-curl), elastic recovery, and/or optical characteristics, and preferably comprises a polymer having relatively low cost while providing these attributes. Such layers preferably have a thickness of from about 0.1 to 3 mils; more preferably, from 0.2 to 1.5 mil; still more preferably, from 0.3 to 1 mil, and yet still more preferably, from about 0.50 to 0.80 mils. Preferred polymers in such inner layers comprise at least one member selected from the group consisting of polyolefin, polystyrene, polyamide, polyester, polymerized ethylene vinyl alcohol, polyvinylidene chloride, polyether, polyurethane, polycarbonate, and starch-containing polymer, more preferably, at least one member selected from the group consisting of ethylene/alpha-olefin copolymer, propylene/alpha-olefin copolymer, butene/alpha-olefin copolymer, ethylene/unsaturated ester copolymer, and ethylene/unsaturated acid copolymer; still more preferably, ethylene/unsaturated ester copolymer.

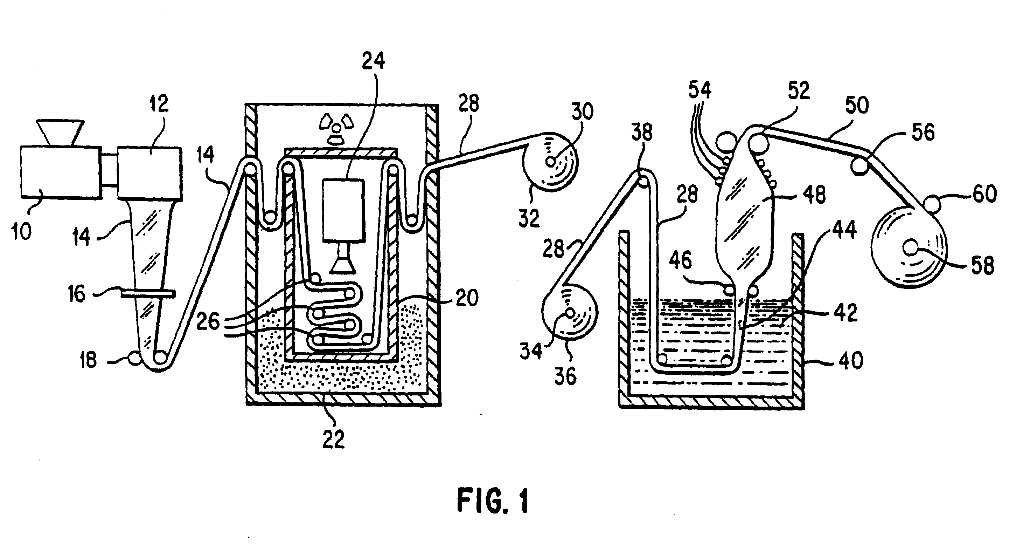

Figure 1 illustrates a process for making a "substrate film" which can thereafter be coated so that it becomes a film suitable for use in accordance with the present invention. In the process illustrated in Figure 1, various polymeric formulations solid polymer beads (not illustrated) are fed to a plurality of extruders (for simplicity, only one extruder is illustrated). Inside extruders 10, the polymer beads are degassed, following which the resulting bubble-free melt is forwarded into die head 12, and extruded through an annular die, resulting in tubing tape 14 which is preferably from about 15 to 30 mils thick, and preferably has a lay-flat width of from about 2 to 10 inches.

After cooling or quenching by water spray from cooling ring 16, tubing tape 14 is collapsed by pinch rolls 18, and is thereafter fed through irradiation vault 20 surrounded by shielding 22, where tubing 14 is irradiated with high energy electrons (i.e., ionizing radiation) from iron core transformer accelerator 24. Tubing tape 14 is guided through irradiation vault 20 on rolls 26. Preferably, tubing tape 14 is irradiated to a level of from about 40-100 kGy, resulting in irradiated tubing tape 28. Irradiated tubing tape 28 is wound upon windup roll 30 upon emergence from irradiation vault 20, forming irradiated tubing tape coil 32.

After irradiation and windup, windup roll 30 and irradiated tubing tape coil 32 are removed and installed as unwind roll 34 and unwind tubing tape coil 36, on a second stage in the process of making the tubing film as ultimately desired. Irradiated tubing 28, being unwound from unwind tubing tape coil 36, is then passed over guide roll 38, after which irradiated tubing 28 is passed through hot water bath tank 40 containing hot water 42. Irradiated tubing 28 is then immersed in hot water 42 (preferably having a temperature of about 85°C to 99°C) for a period of about 20 to 60 seconds, i.e., for a time period long enough to bring the film up to the desired temperature for biaxial orientation. Thereafter, hot, irradiated tubular tape 44 is directed through nip rolls 46, and bubble 48 is blown, thereby transversely stretching hot, irradiated tubular tape 44 so that oriented film tube 50 is formed. Furthermore, while being blown, i.e., transversely stretched, nip rolls 52 have a surface speed higher than the surface speed of nip rolls 46, thereby resulting in longitudinal orientation. As a result of the transverse stretching and longitudinal drawing, oriented film tube 50 is produced, this blown tubing preferably having been both stretched in a ratio of from about 1:1.5 to 1:6, and drawn in a ratio of from about 1:1.5 to 1:6. More preferably, the stretching and drawing are each performed at a ratio of from about 1:2 to 1:4. The result is a biaxial orientation of from about 1:2.25 to 1:36, more preferably, 1:4 to 1:16. While bubble 48 is maintained between pinch rolls 46 and 52, blown tubing 50 is collapsed by converging pairs of parallel rollers 54, and thereafter conveyed through pinch rolls 52 and across guide roll 56, and then rolled onto wind-up roll 58. Idler roll 60 assures a good wind-up.

The resulting multilayer film can be used to form bags, casings, thermoformed articles and lidstocks therefor, etc., which, in turn, can be used for the packaging of cooked meat products in accordance with the present invention. Examples 1-5, below, provide additional details on some of the preferred films, their use in the packaging of a meat product, and the unexpected results obtained therefrom.

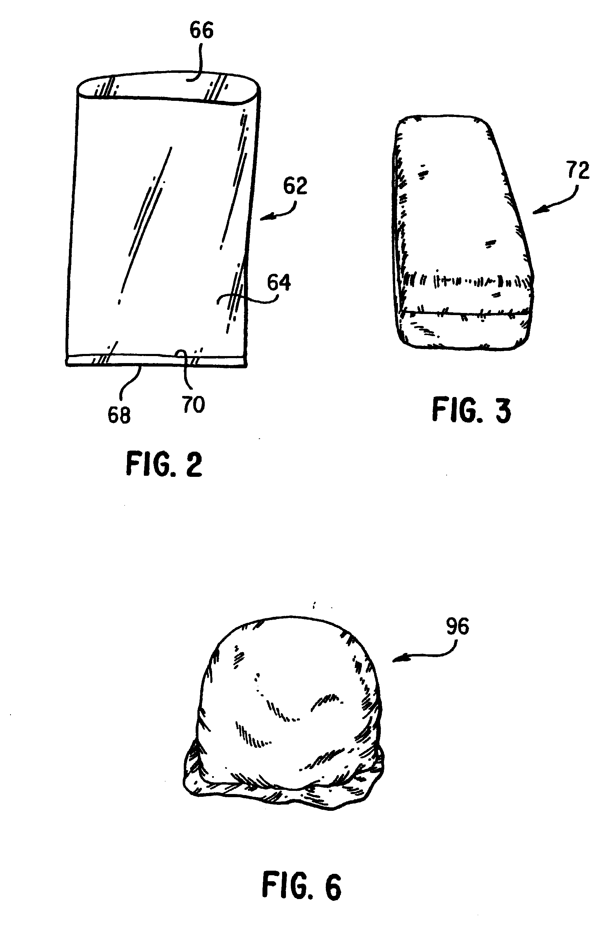

Figure 2 illustrates bag 62 in lay-flat configuration. Bag 62 is made from film 64, and has open top 66, as well as bottom 68 closed by end-seal 70. Bag 62 has a coating on the inside surface thereof (not illustrated) the coating being the inside layer of film 64. An uncooked protein-containing food product, such as a meat product, is placed inside bag 62, with sealed and evacuated bag 62 thereafter being evacuated and sealed, resulting in packaged meat product 72 illustrated in Figure 3. The product, which is surrounded by the film, is thereafter cooked while remaining in the film. During cooking, the flavor and binder are transferred from the bag to the outer surface of the cooked product, in accordance with the present invention.

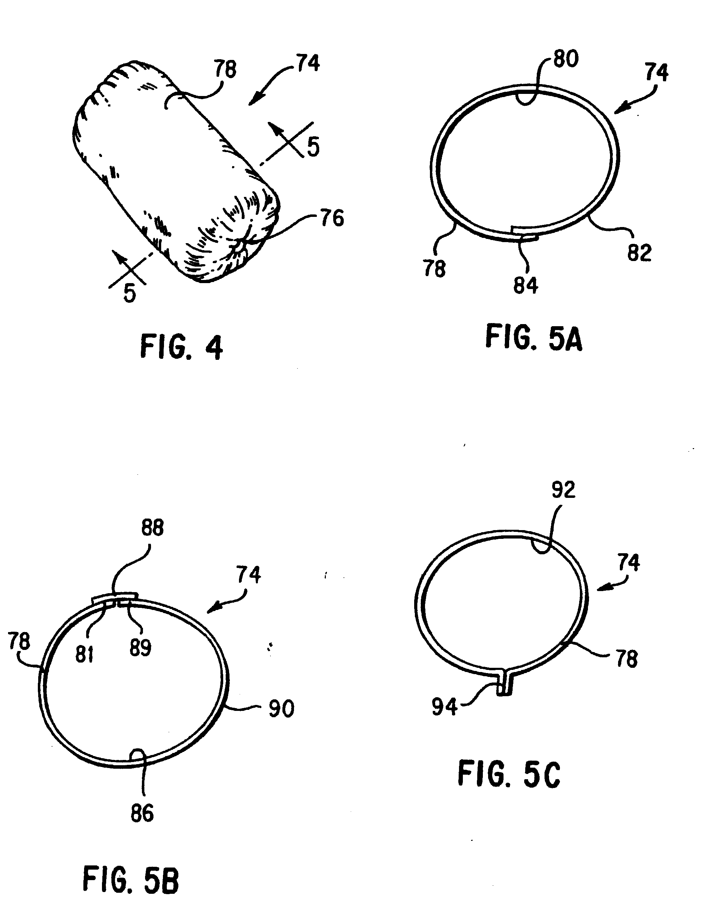

Figure 4 illustrates another embodiment of a packaged product 74 of the present invention, the product being packaged in a casing closed by a pair of clips 76 at each end thereof, with only one clip being illustrated in the perspective view of Figure 4. Film 78, used to package the meat product inside the casing, can be, for example, Film No. 1 or Film No. 2, discussed in detail below.

Figures 5A illustrates a first cross-sectional view of packaged product 74, i.e., taken through line 5-5 of Figure 4. Figure 5A represents a cross-sectional view of a lap-sealed casing comprising film 78 having a coated inside surface region 80, with an uncoated portion heat sealed to outside surface 82 at heat seal 84, the heat seal being located where a first film region overlaps a second film region.

Figure 5B illustrates an alternative cross-sectional view of packaged product 74, i.e., also taken though line 5-5 of Figure 4. Figure 5B represents a cross-sectional view of a butt-sealed backseamed casing comprising film 78 having a coated inside surface region 86. Casing film 78 is heat sealed to butt-seal tape 88. Casing film 78 has inside surface 86 and outside surface 90. Outside surface 90 is heat-sealed to butt-seal tape 88 at seals 87 and 89, where each of the edges of casing film 78 are abutted in close proximity to one another. In this manner, butt-seal tape 88 provides a longitudinal seal along the length of butt-sealed casing film 78. Although butt-seal tape 88 can be made from a monolayer film or a multilayer film, preferably butt-seal tape 88 is preferably made from a multilayer film.

Figure 5C illustrates a cross-sectional view of a third alternative of packaged product 74, i.e., again taken through line 5-5 of Figure 4. Figure 5C represents a cross-sectional view ofa fin-sealed casing comprising film 78 having a coated inside surface region 92. Along the edges of the inside surface of casing film 78 are two uncoated regions which are heat sealed to one another at seal 94, which forms a "fin" which extends from casing 74.

Figure 6 illustrates yet another embodiment of a packaged cooked meat product 96, which is in accordance with the present invention. The product, a cooked meat product, is packaged in a heat-sealed, thermoformed web having a lidstock web sealed thereto, with the meat product being cooked before being placed within the sealed thermoformed package. A portion of each of the films, i.e., the thermoformed web and the lidstock film, have the binder/flavor coating thereon, for contact with the product and transfer to the product.

The polymer components used to fabricate multilayer films for use in accordance with the present invention may also contain appropriate amounts of other additives normally included in such compositions. These include slip agents such as talc, antioxidants, fillers, pigments and dyes, radiation stabilizers, antistatic agents, elastomers, and the like additives, as known to those of skill in the art of packaging films.

Although film useful in the present invention need not always be irradiated, in at least one preferred embodiment, the film is irradiated. In the irradiation process, the film is subjected to an energetic radiation treatment, such as corona discharge, plasma, flame, ultraviolet, X-ray, gamma ray, beta ray, and high energy electron treatment, which may alter the surface of the film and/or induce cross-linking between molecules of the irradiated material. The irradiation of polymeric films is disclosed in U.S. Patent No. 4,064,296, to BORNSTEIN, et. al., which is hereby incorporated in its entirety, by reference thereto. BORNSTEIN, et. al. discloses the use of ionizing radiation for crosslinking polymer present in the film.

Radiation dosages are referred to herein in terms of the radiation unit "RAD", with one million RADS, also known as a megarad, being designated as "MR", or, in terms of the radiation unit kiloGray (kGy), with 10 kiloGray representing 1 MR, as is known to those of skill in the art. To produce crosslinking, the polymer is subjected to a suitable radiation dosage of high energy electrons, preferably using an electron accelerator, with a dosage level being determined by standard dosimetry methods. A suitable radiation dosage of high energy electrons is in the range of up to about 16-166 kGy, more preferably about 30-139 kGy, and still more preferably, 50-100 kGy. Preferably, irradiation is carried out by an electron accelerator and the dosage level is determined by standard dosimetry methods. However, other accelerators such as a Vander Graff or resonating transformer may be used. The radiation is not limited to electrons from an accelerator since any ionizing radiation may be used. A preferred amount of radiation is dependent upon the film and its end use.

As used herein, the phrases "corona treatment" and "corona discharge treatment" refer to subjecting the surfaces of thermoplastic materials, such as polyolefins, to corona discharge, i.e., the ionization of a gas such as air in close proximity to a film surface, the ionization initiated by a high voltage passed through a nearby electrode, and causing oxidation and other changes to the film surface, such as surface roughness. As used herein, the term corona treatment also refers to all forms of plasma treatment.

Corona treatment of polymeric materials is disclosed in U.S. Patent No. 4,120,716, to BONET, issued October 17, 1978, herein incorporated in its entirety by reference thereto. BONET discloses improved adherence characteristics of the surface of polyethylene by corona treatment, to oxidize the polyethylene surface. U.S. Patent No. 4,879,430, to HOFFMAN, also hereby incorporated in its entirety by reference thereto, discloses the use of corona discharge for the treatment of plastic webs for use in meat cook-in packaging, with the corona treatment of the inside surface of the web to increase the adhesion of the meat to the adhesion of the meat to the proteinaceous material.

The invention is illustrated by the following examples, which are provided for the purpose of representation, and are not to be construed as limiting the scope of the invention. Unless stated otherwise, all percentages, parts, etc. are by weight.

### Preparation of the Substrate Film

A 5-3/4" wide (lay-flat dimension) tube, called a "tape", was produced by the coextrusion process described above and illustrated in Figure 1, wherein the film cross-section (from inside to outside of the tube) was as follows:

**Table I**

| Layer Function(s) and Arrangement | Layer Composition | Layer Thickness (mils) |
|---|---|---|
| seal | Blend of 70% LLDPE#1 and 30% EAA#1 | 3.2 |
| strength | Blend of 80% EVA#1 and 20% HDPE#1 | 3.5 |
| tie | Anhydride- grafted LLDPE#2 | 0.9 |
| O₂-barrier | 100% EVOH | 1.0 |
| strength and moisture barrier | Blend of 50% Nylon#1 and 50% Nylon#2 | 1.7 |
| tie | Anhydride-grafted LLDPE#2 | 1.6 |
| strength and balance | blend of 70% EVA#1 and 30% EAA#1 | 3.1 |
| outside | LLDPE#1 | 2.8 |

wherein:
LLDPE#1 was DOWLEX® 2244A, linear low density polyethylene, obtained from Dow Plastics, of Freeport, Texas;
EAA#1 was PRIMARCOR® 1410 ethylene/acrylic acid copolymer obtained from Dow Plastics, of Freeport, Texas. This copolymer had a acrylic acid content of 9.5 % by wt. and a melt index of 1.5;
EVA#1 was PE 5269T (TM) ethylene vinyl acetate copolymer, obtained from Chevron Chemical Company, of Houston, Texas;
HDPE#1 was FORTIFLEX® J60-500C-147 high density polyethylene, obtained from Solvay Polymers, Inc., Deer Park, Texas;
LLDPE#2 was TYMOR® 1203 linear low density polyethylene having an anhydride functionality grafted thereon, obtained from Morton International, of Chicago, Illinois;
EVOH was EVAL® LC-E105A polymerized ethylene vinyl alcohol, obtained from Eval Company of America, of Lisle, Illinois;
NYLON#1 was ULTRAMID® B4 polyamide 6, obtained from BASF corporation of Parsippany, New Jersey;
NYLON#2 was GRILON® CF6S polyamide 6/12, obtained from EMS-American Grilon Inc., of Sumter, S.C.;

All the resins were coextruded at between 380°F and 500°F, and the die was heated to approximately 420°F. The extruded tape was cooled with water and flattened, the flattened width being 5-3/4 inches wide in a lay flat configuration. The tape was then passed through a scanned beam of an electronic cross-linking unit, where it received a total passage of about 64 kilo grays (kGy). After irradiation, the flattened tape was passed through hot water (approximately 206°F to 210°F) for about 20 seconds. The resulting heated tape was inflated into a bubble and oriented into a film tubing having a lay-flat width of 16-1/2 inches and a total thickness of about 2.4 mils. The bubble was stable and the optics and appearance of the film were good. The film tubing was determined to have about 20% free shrinkage in the longitudinal direction and about 30% free shrinkage in the transverse direction, when immersed in hot water for about 10 minutes, the hot water being at a temperature of 185°F, i.e., using ASTM method D2732-83. The resulting tubing was slit into film.

### Preparation of Coating Formulation No. 1

This example demonstrated (a) preparation of a typical coating formulation that has been used for flavor transfer, where the flavor is in the form of an oil, and (b) the process of coating a substrate film. The coating formulation was prepared by combining:

| | |
|---|---|
| Hydroxypropyl starch #1 | 70 grams |
| Glycerol #1 | 7 grams |
| Water | 210 grams |
| Wood Fired Grill Natural Flavor #1 | 8.75 grams |

Hydroxypropyl Starch #1 was PURE COTE™ B790 hydroxypropyl starch, obtained from Grain Processing Corporation, of Muscatine, Iowa;
Wood Fired Grill Natural Flavor #1 was L6204 Wood Fired Grill Natural Flavor Type H, obtained from Kraft Food Ingredients of Memphis, Tennessee;
Hydroxypropyl Starch #1 was slowly added to water while stirring, and the suspension was heated to a temperature of approximately 150°F. The temperature of the stirred mixture was then maintained at about 150°F for about 1/2 hour, where after the viscosity of the mixture dropped substantially due to the hydration of the hydroxypropyl starch. The mixture was then cooled to room temperature, and Glycerol #1 was added to the mixture. To this mixture, Wood Fired Grill Natural Flavor #1 was added and the mixture was stirred with a mixer.

### Example 1 (Comparative) (Making the Film Coating, Packaging Food in the Film, Reheating and Accompanying Flavor Transfer)

Film No. 1 was made by application of Coating Formulation No. 1 to the Substrate Film. Prior to the coating process, the Substrate Film was corona treated on the food-contact side (i.e., the layer comprising 70% LLDPE #1 and 30% EAA#1). The coating was applied in such a manner that one side of the film was coated except for approximately one inch along each of the film edges. Upon application of the coating to the film, the coating beaded up and a continuous coating could not be achieved on the film. This was probably due to the fact that the particle size of the flavor (which was in the form of oil) was too big, so that it beaded up on application and a continuous coating was not obtained. See Example 2, below, in which a micro-emulsion of the flavor oil in the binder was made to see if a continuous coating could then be applied.

### Preparation of Coating Formulation No. 2

This example demonstrated preparation of a micro-emulsion of the coating formulation that was used: (a) for flavor transfer, where the flavor was in the form of an oil, (b) the film coating process, and (c) cooking of the meat for flavor transfer from film to the meat. The coating formulation was prepared using:

| | |
|---|---|
| Hydroxypropyl starch #1 | 70 grams |
| Glycerol #1 | 7 grams |
| Water | 210 grams |
| Wood Fired Grill Natural Flavor #1 | 8.75 grams |

Hydroxypropyl Starch #1 was slowly added to water while stirring, and the suspension was heated to a temperature of approximately 150°F. The temperature of the stirred mixture was then maintained at about 150°F for about 1/2 hour, where after the viscosity of the mixture dropped substantially due to the hydration of the hydroxypropyl starch. The mixture was then cooled to room temperature, and Glycerol #1 was added to the mixture. To this mixture, Wood Fired Grill Natural Flavor #1 was added and the mixture was stirred at 4000 rpm for 10 minutes, using a Laboratory Dispersator (Series 2000, model 84), available from Premier Mill Corporation of Philadelphia, Pennsylvania. The particle size of the oil in the emulsion was less than 5 microns.

### Example 2 (Making the Film Coating, Packaging Food in the Film, Reheating and Accompanying Flavor Transfer)

Film No. 2 was made by application of Coating Formulation No. 2 to the Substrate Film. Prior to the coating process, the Substrate Film was corona treated on the food-contact side (i.e., the layer comprising 70% LLDPE #1 and 30% EAA#1). The coating was applied in such a manner that one side of the film was coated except for approximately one inch along each of the film edges. The resulting coating did not bead up and was continuous. The resulting Film No. 2 was sealed to make a pouch.

The flavor (grilled chicken flavor) transfer evaluation was made by placing a cooked piece of chicken breast in the pouch, sealing the pouch and reheating the cooked piece of chicken breast in a microwave. Taste testing of the chicken showed that the meat had a grilled chicken flavor.

### Preparation of Coating Formulation No. 3

This example demonstrated the use of an encapsulating agent in the packaged product and process of the present invention. The encapsulating agent was present in the coating formulation. The encapsulating agent also served as a binder. Coating Formulation No. 3 was prepared by combining the following:

| | |
|---|---|
| Tapioca Dextrin #1 | 64 grams |
| Glycerol #1 | 6.4 grams |
| Water | 150 grams |
| Wood Fired Grill Natural Flavor #1 | 17.5 grams |

Tapioca Dextrin #1 was CRYSTAL GUM, obtained from National Starch and Chemical Company, of Bridgewater, New Jersey;

Coating Formulation No. 3 was prepared by slowly adding Tapioca Dextrin #1 to water while stirring, with the suspension being heated to a temperature of approximately 150°F. The temperature of the stirred mixture was then maintained at about 150°F for about 1/2 hour, after which the viscosity of the mixture dropped substantially due to the hydration of the dextrin. The mixture was then cooled to room temperature, and Glycerol #1 was added to the mixture. Wood Fired Grill Natural Flavor #1 was added to the resulting mixture, which was thereafter stirred with a mixer.

### Example 3 (Comparative)

### (Making the Film Coating, Packaging Food in the Film, Reheating and Accompanying Flavor Transfer)

Film No. 3 was made by application of Coating Formulation No. 3 to the Substrate Film. Prior to the coating process, the film was corona treated on the food-contact side (i.e., the layer comprising 70% LLDPE #1 and 30% EAA#1). The coating was applied in such a manner that the film was coated except for approximately one inch along each of the film edges. Upon application of the coating to the film, the resulting coating beaded up to give a discontinuous coating on the film. It appears that even though the dextrin may have been able to encapsulate the flavorant, dextrin was not a good binder for coating. In Example 4, below, a binder was added to the formulation in order to provide a continuous coating on the film.

### Preparation of Coating Formulation No. 4

This example demonstrated: (a) preparation of a formulation which contained encapsulating agent and a binder that was used for flavor transfer, where the flavor was in the form of an oil, (b) the film coating process, and, (c) cooking of the meat for flavor transfer from film to the meat. The coating formulation was prepared by combining the following:

| Blend A | |
|---|---|
| Hydroxypropyl starch #1 | 64 grams |
| Glycerol #1 | 6.4 grams |
| Water | 192 grams |

| Blend B | |
|---|---|
| Tapioca Dextrin #1 | 64 grams |
| Glycerol #1 | 6.4 grams |
| Water | 150 grams |
| Wood Fired Grill Natural Flavor #1 | 17.5 grams |

Blend A was prepared by slowly adding Hydroxypropyl Starch #1 to water while stirring, with the suspension being heated to a temperature of approximately 150°F. The temperature of the stirred mixture was then maintained at about 150°F for about 1/2 hour, after which the viscosity of the mixture dropped substantially due to the hydration of the hydroxypropyl starch. The mixture was then cooled to room temperature, and Glycerol #1 was added to the mixture.

Blend B was prepared by slowly adding Tapioca Dextrin #1 to water while stirring, with the suspension being heated to a temperature of approximately 150°F. The temperature of the stirred mixture was then maintained at about 150°F for about 1/2 hour, after which the viscosity of the mixture dropped substantially due to the hydration of the hydroxypropyl starch. The mixture was then cooled to room temperature, and Glycerol #1 was added to the mixture. Wood Fired Grill Natural Flavor #1 was then added to the mixture, which was then stirred with a mixer. Blend A and Blend B were then mixed together and stirred for a few minutes.

### Example 4

### (Making the Film Coating, Packaging Food in the Film, Reheating and Accompanying Flavor Transfer)

Film No. 4 was made by application of Coating Formulation No. 4 to the Substrate Film. Prior to the coating process, the film was corona treated on the food-contact side (i.e., the layer comprising 70% LLDPE #1 and 30% EAA#1). The coating was applied in such a manner that the film was coated except for approximately one inch along each of the film edges. The resulting formulation was applied on to the Substrate Film for coating. A continuous coating was obtained. It appeared that the oil was encapsulated in the encapsulating agent, dextrin. Therefore, the formation of micro-emulsion was not necessary. The resulting coated film was sealed to make a pouch..

The flavor (grilled chicken flavor) transfer evaluation was made by putting a cooked piece of chicken breast in the pouch, sealing the pouch and reheating the meat in a microwave. Taste testing of the chicken showed that the meat had a grilled chicken flavor.

### Preparation of Coating Formulation No. 5

This example demonstrated the preparation of a formulation that was used to apply a glaze onto cooked meat, as well as to transfer flavor (an oil extract) to the cooked meat. The coating formulation was prepared by combining:

| Blend C | |
|---|---|
| Hydroxypropyl starch #1 | 64 grams |
| Glycerol #1 | 6.4 grams |
| Water | 192 grams |

| Blend D | |
|---|---|
| Tapioca Dextrin #1 | 64 grams |
| Glycerol #1 | 6.4 grams |
| Water | 150 grams |
| Orange Oil Extract #1 | 17.5 grams |

Orange Oil Extract #1 was a mixture of alcohol (80%), water, and oil of orange, sold by McCormick and Company, of Hunt Valley, Maryland;
Blend C was prepared by slowly adding Hydroxypropyl Starch#1 to water while stirring, with the suspension being heated to a temperature of approximately 150°F. The temperature of the stirred mixture was then maintained at about 150°F for about 1/2 hour, after which the viscosity of the mixture dropped substantially due to the hydration of the hydroxypropyl starch. The mixture was then cooled to room temperature, and Glycerol #1 was added to the mixture.

Blend D was prepared by slowly adding Tapioca Dextrin #1 to water while stirring, with the suspension being heated to a temperature of approximately 150°F. The temperature of the stirred mixture was then maintained at about 150°F for about 1/2 hour, after which the viscosity of the mixture dropped substantially due to the hydration of the hydroxypropyl starch. The mixture was then cooled to room temperature, and Glycerol #1 was added to the mixture. To this mixture was added Orange Oil Extract #1, and the mixture stirred with a stirrer. Blend C and Blend D were mixed together and stirred for a few minutes.

### Example 5

### (Making the Film Coating, Packaging Food in the Film Reheating and Accompanying Flavor Transfer)

Film No. 5 was made by application of Coating Formulation No. 5 to the Substrate Film. Prior to the coating process, the film was corona treated on the food-contact side (i.e., the layer comprising 70% LLDPE #1 and 30% EAA#1). The coating was applied in such a manner that the film was coated except for approximately one inch wide edges of the film. The resulting coated film was sealed to make a pouch.

The glazing and flavor (orange flavor) transfer evaluation was made by putting a cooked piece of ham in the pouch, sealing the pouch and reheating the meat in a microwave. Taste testing of the ham product showed that the meat had an orange flavor. Visual inspection of the surface of the piece of ham showed that the surface had a glaze on it.

All ranges within all of the above-disclosed ranges are expressly included within this specification. Moreover, layers which are adjacent or directly adhered to one another are preferably of differing chemical composition, especially differing polymeric composition. All reference to ASTM tests are to the most recent, currently approved and published version of the ASTM test identified, as of the priority filing date of this application.

Although the present invention has been described in connection with the preferred embodiments, it is to be understood that modifications and variations may be utilized without departing from the principles and scope of the invention, as those skilled in the art will readily understand. Accordingly, such modifications may be practiced within the scope of the following claims.

## Claims

1. A packaged product comprising a cooked meat product surrounded by a multilayer film comprising:
(A) a first layer comprising
(i) a flavor component and (ii) a binder comprising a polysaccharide or protein; and
(B) a second layer comprising at least one non-water-soluble thermoplastic polymer selected from polyolefin, polyamide, polyester, polyvinylidene chloride, polyvinyl chloride, and polystyrene; and
wherein the flavor and the binder are present throughout the thickness of the first layer and the first layer is between the second layer and the cooked meat product.

2. A packaged product according to claim 1, wherein the flavor component comprises grilled chicken flavor and the meat comprises poultry.

3. A packaged product according to claim 1 or 2, wherein the binder comprises at least one of: alginate, methyl cellulose, hydroxypropyl starch, hydroxypropylmethyl starch, hydroxymethyl cellulose, hydroxypropyl cellulose, hydroxypropylmethyl cellulose, carboxymethyl cellulose, cellulose esterified with 1-octenyl succinic anhydride, chitin, chitosan, gliadin, glutenin, globulin, albumin prolamin, thrombin, pectin, canageenan, konjac flour-glucomannin, fibrinogen, casein, soy protein, whey protein, and wheat protein.

4. A packaged product according to claim 1, 2 or 3, wherein the binder comprises hydroxypropyl starch.

5. A packaged product according to any one of the preceding claims wherein the first layer further comprises a crosslinking agent.

6. A packaged product according to claim 5, wherein the crosslinking agent comprises at least one of malose, glutaraldehyde, glyoxal, dicarboxylic acid, ester of dicarboxylic acid, urea formaldehyde, melamine formaldehyde, thrimethylolmelamine, organic compound containing at least 2 sulfhydryl groups, and a component in liquid smoke comprising at least two carbonyl groups.

7. A packaged product according to any one of the preceding claims wherein the second layer is directly adhered to the first layer.

8. A packaged product according to any one of claims 1 to 6, further comprising a third layer which is between the first layer and the second layer.

9. A packaged product according to claim 8, wherein the third layer comprises polysaccharide or protein.

10. A packaged product according to any one of claims 1 to 6, further comprising a third layer comprising polysaccharide or protein, wherein the first layer is between the second layer and the third layer.

11. A packaged product according to claim 10, further comprising a fourth layer which is between the first layer and the second layer.

12. A packaged product according to any one of the preceding claims wherein the first layer further comprises an encapsulating agent comprising at least one of carbohydrate and protein.

13. A packaged product according to claim 12, wherein the encapsulating agent comprises gum or cellulose.

14. A packaged product according to claim 12, wherein the encapsulating agent comprises at least one of corn syrup, dextrin, starch, sucrose, agar gum, carrageenan, gum arabic, sodium alginate, carboxymethylcellulose, ethyl cellulose, methyl cellulose, albumin, casein, gelatin, and gluten.

15. A packaged product according to any one of the preceding claims wherein the first layer further comprises a glazing agent.

16. A packaged product according to any one of the preceding claims wherein the first layer further comprises a plasticizer.

17. A packaged product according to claim 16, wherein the plasticizer comprises at least one of polyol, sodium citrate, and thiethyl citrate.

18. A process for preparing a food product, comprising:
(A) cooking a meat product;
(B) packaging the cooked meat product in a multilayer film comprising:
(1) a first layer, which is an inside layer, and which comprises:
(i) a flavor component and (ii) a binder comprising polysaccharide or protein, and
(2) a second layer comprising at least one non-water-soluble thermoplastic polymer selected from polyolefin, polyamide, polyester, polyvinylidene chloride, polyvinyl chloride, and polystyrene; and
wherein the flavor and the binder are present throughout the thickness of the first layer and the first layer is between the second layer and the cooked meat product.

19. A process according to claim 18, further comprising reheating the cooked meat product after packaging, so that the flavor is transferred to the cooked meat product.

20. A process for making a coated multilayer film comprising:
(A) preparing a coating composition comprising:
(i) water;
(ii) a flavor component; and
(iii) a binder comprising polysaccharide or protein; and
(B) emulsifying the coating composition until the average particle size of the flavor component is from about 0.5 micron to about 50 microns;
(C) coating an outer surface of a substrate film with the emulsified coating composition; and
(D) drying the coating composition so that the coating composition becomes a first layer of a resulting coated film, the substrate film being at least a second layer of the resulting coated film; and
wherein the substrate film comprises at least one of polyolefin, polyamide, polyester, polyvinylidene chloride, polyvinyl chloride, and polystyrene.

21. A process for making a coated multilayer film, comprising:
(A) preparing an additive blend comprising:
(i) water;
(ii) a flavor component; and
(iii) encapsulating agent which comprises a carbohydrate or protein;
(B) preparing a binder blend comprising water and a binder comprising polysaccharide or protein; and
(C) blending the additive blend with the binder blend, so that a coating blend is produced;
(D) coating an outer surface of a substrate film with the coating blend; and
(E) drying the coating blend so that the coating blend forms a first layer of a resulting coated film, the substrate film being at least a second layer of the resulting coated film; and
wherein the substrate film comprises at least one of polyolefin, polyamide, polyester, polyvinylidene chloride, polyvinyl chloride, and polystyrene.

22. A process according to claim 20 or 21, wherein the coating composition or blend is applied to the substrate film using a roll, gravure, flexographic, meyer rod, reverse angle doctor blade, knife over roll, two roll reverse, three roll reverse, comma roll or lip coating.
